# EUROPEAN PATENT SPECIFICATION

(11) **EP 1 319 727 B1**
(45) Date of publication and mention of the grant of the patent: **02.04.2008**
(21) Application number: 02425760.2
(22) Date of filing: 11.12.2002
(51) Int. Cl.: C22B 7/02, C22B 19/34, C01G 9/02, C25C 1/16

(54) **Pyro-hydrometallurgical process for the recovery of zinc, lead and other value metals from iron- and steelmaking shop dusts**
Pyro-hydrometallurgisches Verfahren zur Wiedergewinnung von Zink, Blei und sonstigen Wertmetallen aus Stäuben der Eisen- und Stahlhütten
Procédé pyro-hydrométallurgique pour la récupération du zinc, du plomb et d'autres métaux de valeur à partir de poussières sidérurgiques

(30) Priority: 11.12.2001 IT RM20010727
(43) Date of publication of application: 18.06.2003
(73) Proprietor: CENTRO SVILUPPO MATERIALI S.p.A., I-00129 Roma (IT)
(72) Inventor: Colletta, Angelo, Centro Sviluppo Materiali S.p.A., 00129 Roma (IT)
(74) Representative: Leone, Mario

(56) References cited:
- EP-A- 0 420 525
- DE-A- 19 754 209
- GB-A- 2 017 670
- US-A- 4 372 780
- US-A- 4 488 905
- US-A- 5 728 193
- US-A- 5 912 402
- DATABASE WPI Section Ch, Week 198905 Derwent Publications Ltd., London, GB; Class E32, AN 1989-034816 XP002251619 & JP 63 307116 A (MYOCHU KOGYO KK), 14 December 1988 (1988-12-14)
- PATENT ABSTRACTS OF JAPAN vol. 005, no. 098 (C-060), 25 June 1981 (1981-06-25) & JP 56 041335 A (NIPPON JIRYOKU SENKO KK), 18 April 1981 (1981-04-18)

## Description

The present invention refers to the field of the recovery of value metals present in form of oxides in iron- and steelmaking powders.

As it is known, metallurgical plants generate powders that are to be recovered for ecological as well as for economical reasons. These powders, e.g. the EAF dusts (dusts from carbon steel- and/or stainless steelmaking) contain several value metals in form of oxides, in particular zinc and lead.

The state of the art envisages several processes for the recovery of the abovementioned value metals.

Recently, research has focussed on pyro-hydrometallurgical processes, which additionally allow the destroying of noxious components like dioxins.

However, state-of-the art processes are less than satisfactory in terms of process yield, simplicity of execution and operation costs. Hence, in the specific field there subsists the demand for an improved pyro-hydrometallurgical process.

The present invention meets this demand, further providing other advantages that will be made apparent hereinafter.

In fact, a subject of the present invention (where the features before the characterising portion represent a standard practice in the pilot plant of present applicant) is a pyro-hydrometallurgical process for the recovery of zinc, lead and other value metals from iron- and steelmaking powders, comprising a pyrometallurgical stage with the steps of feeding and treating the powders in a furnace, e.g. in a plasma arc furnace, containing molten iron- and steelmaking powders and slag, under reducing conditions due to the presence of carbonaceous material, with chemical reduction of the metal oxides contained therein and with production of ferroalloys containing non-volatile metals and of inert slag, post-combustion chamber reoxidizing of volatile metals and collecting the resulting ZnO-enriched metal oxide powders, and a hydrometallurgical stage with the steps of alkaline leaching, reducing to the metallic state of optionally present nickel, copper and cadmium cations, and electrolysing the resulting solution to obtain metallic zinc, characterised in that, in the pyro-hydrometallurgical stage, the powders are fed to the furnace at a close distance from the slag such as to prevent losses by turbulence due to the internal negative pressure of the furnace and, in the hydrometallurgical stage, the alkaline leaching is replaced by a water washing, the leaching is sulphuric leaching carried out at a pH ranging from 2 to 4.5, iron and fluoride precipitation being attained in a subsequent step of coagulant oxidation in which to the solution is added an oxidizer for the oxidation of Fe ions from bivalent to trivalent which precipitate as ferritic hydrate by addition of calcium carbonate. The latter, under these conditions, also determines the precipitation of fluoride ions as calcium fluoride.

The metallurgical plant generating the powders may be an electric furnace.

The powders may be fed into the plasma arc furnace at a distance from the slag ranging from 1 to 300 mm.

The sulphuric leaching is carried out with the exhausted electrolytic solution, optionally replenished with fresh sulfuric acid.

The sulphuric leaching is carried out at a pH of about 2.5 when zinc ferrite is present in the powders, and at a pH of about 4 when zinc ferrite is not present in the powders.

The lead sulfate precipitated during sulfuric acid leaching is recycled at the pyrometallurgical stage.

At the coagulant oxidation step, the oxidizer for oxidizing iron from the oxidation state 2 to the oxidation state 3 may be hydrogen peroxide, in particular 30% hydrogen peroxide, or injected air.

The metal reduction of the optionally present nickel, copper and cadmium ions may be attained, at temperatures ranging from 85 to 95°C, in a single stage by addition of fine-powdered zinc in excess, of copper (11) sulfate and of antimony tartrate, the reduction treatment time ranging from 0.5 to 1.5 h.

The electrolysis is conducted in cells having an anode of lead of or alloys thereof. In particular, it has been observed that a 1% Ag lead alloy prevents in-cell lead stripping.

The cells adopted for the electrolysis may be provided with aluminium cathodes.

Prior to the carrying out of the electrolysis, the aluminium cathodes may be kept in the sulphuric electrolytic solution for a time ranging from 0.5 to 15 min to foster the formation of an aluminium sulfate layer onto which fluoride ions do not deposit. The lead from the lead anode stripping in the electrolytic solution may be coprecipitated as sulfate by addition of compounds selected from the group comprising strontium and barium carbonates and hydroxides, optionally in form of electrolytic solution. With the process of the invention high-purity metallic zinc is obtainable from iron-and stell making furnace dusts.

So far, the present invention has been generally outlined. With the aid of the figure and of the example, hereinafter a more detailed description of embodiments thereof will be given, aimed at making apparent the aims, features, advantages and operation modes of the present invention.

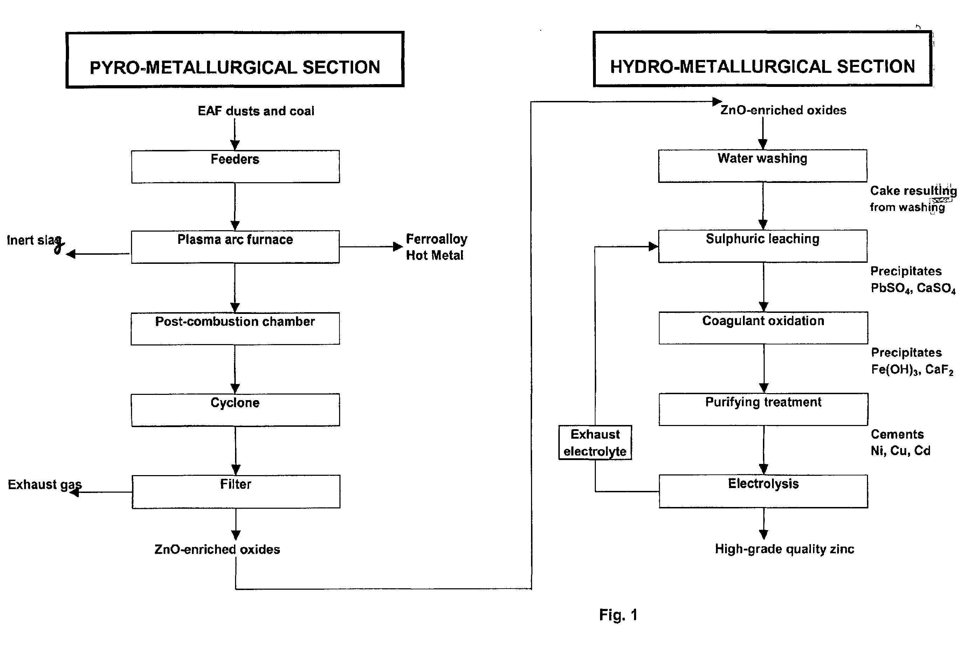

Figure 1 shows a block diagram for the carrying out of an embodiment of the pyro-hydrometallurgical process for the recovery of zinc, lead and iron alloys from EAF dusts (mix of dust from stainless and carbon steels production by electric arc furnace).

### EXAMPLE

The purpose of the exemplified treatment is to recover the value metals, in particular electric arc furnace).

The carrying out of the exemplified process follows the block diagram schematically shown in figure 1.

### Pyrometallurgical section

The EAF powder is processed at elevated temperature in a plasma arc furnace, under reducing conditions due to the presence of carbonaceous materials, to produce zinc-enriched metallic powders that are subsequently reoxidized. The treatment is initiated in a plasma arc furnace containing a molten EAF powder/slag bath. The powders yielded by the entire pyrometallurgical treatment exhibit an >80% zinc oxide content. Hereinafter, the chemical composition of powder obtained in pyrometallurgical treatment is reported. These powders consist of:

| | | | |
|---|---|---|---|
| ZnO | 80.29% | CaO | 2.61% |
| PbO | 4.45% | SiO₂ | 0.05% |
| CdO | 0.06% | Al₂O₃ | 0.09% |
| K₂O | 0.55% | MgO | 0.58% |
| Na₂O | 0.96% | Cr₂O₃ | 0.42% |
| Fe₂O₃ | 3.48% | NiO | 0.13% |
| MnO | 0.86% | CuO | 0.09% |
| Chlorides | 0.53% | SO₄⁻² | 1.27% |
| Fluorides | 0.14% | Minor components | 3.44% |

This positive result was attained by introducing the EAF powder in the plasma arc furnace substantially at slag level; this contrivance prevents loss of the material fed to the plasma arc furnace by effect of turbulence due to the internal negative pressure of the furnace.

Concomitantly, the non-volatile metals, obtained by reduction of the oxides present in the EAF powder used, bind to the metal bath, thereby allowing recovery of manganese, chrome and other heavy metals (Fe, Ni, Si) present in the powders. The volatile metals are instead reoxidized in a subsequent afterburning step.

The slag originating from the plasma arc furnace treatment is an inert slag.

The powder enriched with zinc oxide (80.29%) and lead oxide (4.45%) yielded by the pyrometallurgical treatment is processed in the subsequent hydrometallurgical treatment which ends with the electrolytic deposit of high-purity zinc.

### Hydrometallurgical section

The hydrometallurgical treatment considered comprises the following steps:
1. water washing, important to ensure removal of chlorides, alkali and fluorides;
2. sulphuric leaching of the zinc oxide-enriched powder;
3. coagulant oxidation of the leached product to reduce iron and fluorine to acceptable levels;
4. single-stage purification treatment to reduce copper, cadmium and nickel to cements;
5. electrolysing the solution to collect high-purity metallic zinc.

Tests conducted allowed to define the quantitated flow diagram and the related operative conditions.

Water washing. The purpose of this step is to remove chlorides and alkaline metals and to partially remove fluorides.

The zinc oxide-enriched powder is subjected to water mixing, charging 130 kg of ZnO-enriched oxides and water in the washing reactor until attaining a 160 g/l suspension. After about +1 h of reaction (T = 50°C), the pulp is forwarded to filter-pressing. The filtrate solution is analysed. Upon rinsing, the solid panel (cake) is fed to the sulphuric leaching reactor. Cake washing is technically required in order to get rid of a cake-soaking solution containing undesirable ions.

Sodium, potassium, chlorides and fluorides are eliminated, with yields of 90% (Na), 82% (K), 96% (chlorides) and 31% (fluorides), respectively. The rinsing water (discharge thresholds: chlorides ≤ 1200 mg/l, fluorides < 6 mg/l, as provided for by Decree-law 258 of 08/18/2000, 91/271/CEE) is sent to the water treatment plant of the works.

Sulphuric leaching. The purpose of this step is to dissolve the powder-contained zinc oxide and zinc ferrite, using the regenerated sulfuric acid in electrolysis (exhausted electrolyte, E.E.; industrial values, 40 g/l Zn⁺⁺, 160 g/l H₂SO₄).

The cake from the preceding rinsing step is fed to the sulphuric leaching reactor, in which there are added E.E., and additionally a 30% H₂SO₄ solution to compensate losses due to Pb precipitation as PbSO₄.

The required reaction time is of 90 min under stirring at 55°C. All the zinc is solubilized, and the solution is charged to about 100 g/l zinc ions; the reaction is deemed ended when the solution pH reaches 2.5, a value apt to solubilize only the ferritic zinc present in the powders.

The main reactions taking place in the leaching step are the following endothermic reactions:

ZnOₛ + H₂SO₄ = ZnSO₄ + H₂O

PbOₛ + H₂SO₄ = PbSO₄ + H₂O

CaOₛ + H₂SO₄ = CaSO₄ + H₂O

Once the reaction has ended, the suspension is filtered on a filter press. The filter cake, comprising PbSO₄ and CaSO₄, as well as trivalent iron and inerts (SiO₂, Al₂O₃), is toxic, due to the presence of lead. Therefore, said cake should be recycled in a pyrometallurgical furnace until attaining a lead percent in the powder allowing the sale of the latter (> 40% Pb ).

Coagulant oxidation. The clear solution is subjected to suitable purification treatments. In fact, it has to be pointed out that cations of all the elements contained in the powders may be found in the solution, and in particular those of Fe (when present, as Fe⁺⁺), Cu, Cd and Ni, which are detrimental since causing anomalous depositions during electrolysis and affecting the cathodes.

The process for removing the iron present in the solutions outletted from the sulphuric leaching consists in oxidizing iron from bivalent to trivalent, by means of 30% hydrogen peroxide and in the concomitant ferric hydrate precipitation by CaCO₃ introduction. The purpose of the step is to reduce the iron in the solution to < 5 mg/l concentrations, so as not to pollute cathode deposit during electrolysis.

The step is conducted heating the solution in the coagulant oxidation reactor at a temperature of 80°C. The reaction time is of 280 min (100 min treatment plus 180 min sedimentation). The pH is 4.8; at this stage a partial coprecipitation as CaF₂ of the fluoride ions occurs.

Upon siphoning, the solution is stored in a tank, whereas the valueless iron-depleted cake may be sent to the pyrometallurgical section.

Purifying treatment. The leached solution from the storage tank still contains a remarkable quantity of impurities adversely affecting current efficiency or deposit quality during the electrolytic deposit of zinc, i.e., all elements preceding zinc in the electrochemical scale, like copper, cadmium and nickel.

E.g., nickel, depositing at the cathode, lowers the overvoltage of Hydrogen (an element which anyhow is little discharged). Also copper and cadmium deposit at the cathode, lowering however zinc percentage.

To date, all purifying processes in use envisage a cementation of these impurities with a fine powder of metallic zinc: the impurities, reduced to the metallic state, bind to the excess of zinc powder used, generating residues conventionally referred to as 'purification cements'. Cu and Cd ions easily cement at a 60 °C temperature with a stoichiometric dosage of powdered zinc; instead, Ni ions cement less easily, with a very slow reaction and requiring operation at a 90°C temperature, to improve the cementation kinetics, and in the presence of specific activators of the zinc powder surface. Conventional antimony purification technology resorts to a controlled dosing of antimony as a primary activator and of copper as a secondary activator. Antimony purification technology envisages two stages. The first stage is conducted at a 60°C temperature with Cu and Cd cementation. Then, in the second stage the solution is brought to a 90°C temperature and antimony and copper activators are added for nickel precipitation. The purpose of this process is to attain a Cu-Cd cement unpolluted by nickel.

On the contrary, the purifying treatment set up with laboratory and plant studies by the inventors of the present invention, is carried out at a 90°C temperature in a single stage, in a purification reactor in which as reagents CuSO₄, Sb in form of tartrate (31.86 ratio) and zinc powder in excess (6 g/l) are added. With these reagents and a reaction time of 1 h at a 90°C temperature, the outletted solution has a percentage of Ni, Cu, Cd and Sb which is lower than the threshold value for a good electrolysis.

The chemical reactions taking place at this stage are as follows:
- cementation
   MeSO₄ + Znₘₑₜ = Me + ZnSO₄ (Me = Cu, Cd)
- antimonide formation
   3MeSO₄ +2H₃SbO₃+ 6Zn+ 3H₂SO₄ = Me₃Sb₂ +6ZnSO₄ +6H₂O (Me=Ni)
   6CuSO₄ + 2H₃SbO₃ + 9Zn + 3H₂SO₄ = 2Cu₃Sb + 9ZnSO₄ + 6H₂O

Upon belt press filtration (Ni, Cu, Cd, Zn and Sb cements) the solution is inletted in a storage tank.

Then, there is provided a treatment of the zinc cements resulting from this stage. The step consists in treating the cements with exhausted electrolyte for the recovery of the zinc, and is to be conducted under controlled pH conditions (hydrogen development tales place during attack to metallic zinc) and is arrested as soon as solubilization of the other elements present begins. The zinciferous solution progresses to sulphuric leaching.

Electrolysis. The solution is sent, through the storage tank TK-2, to the electrolysis cell for zinc deposition. The electrolysis cell, downstream of the hydrometallurgical treatment plant, consists of a tank in which 30 aluminium cathodes and 31 lead anodes are immersed.

During the deposition process, the heat quantity is subtracted recycling the solution through a coolant.

The cathodic reactions are as follows:

Zn⁺⁺ (SO₄⁻²) + 2e = Znₘₑₜ + SO₄⁻²

2H⁺ + 2e = H₂

The anodic reactions are as follows:

2H₂O + 4e = 4H⁺ + O₂

The complete reaction is as follows:

ZnSO₄ + H₂O = Zn° + H₂SO₄ + 1/2 O₂

Hence, a mole of sulfuric acid is formed for each mole of zinc deposited; this acid, apart from sulfate losses caused by soluble product precipitation, is in a quantity required to attack, at the leaching stage, the same quantity of deposited zinc.

Electrolysis was conducted with a 3.55 V voltage and a 6200 A operating current at steady conditions.

At the end of electrolysis, detachment of the zinc plates from each cathode was easily effected, resorting to common mechanical means.

In the following Table 1 chemical and physical data of the representative sample of the yielded high-purity (> 99.90%) zinc are reported.

**Table 1**

| Chemical and physical data of the high-purity zinc yielded by electrolysis | | | | | | | | |
|---|---|---|---|---|---|---|---|---|
| | % | mg/kg | | | | | | |
| Density g/cm³ | Zn | Pb(*) | Ni | Cu | Cd | Fe | Sb | Mn |
| 7.08 | 99.96 | 300 | <10 | 28 | 4 | 10 | <5 | 1 |

Prior to electrolysis there may be added small quantities of SrCO3 which prevent deposition of the lead from the dissolving of small quantities of anodic material (fostered by the presence of chloride ions).

## Claims

1. Pyro-hydrometallurgical process for the recovery of zinc, lead and other value metals from iron- and steelmaking powders, comprising a pyrometallurgical stage, with the steps of feeding and treating the powders in a furnace containing molten iron- and steelmaking powders and slag, under reducing conditions due to the presence of carbonaceous material, with chemical reduction of the metal oxides contained therein and with production of ferroalloys containing non-volatile metals and of inert slag, post-combustion chamber reoxidizing of volatile metals and collecting the resulting ZnO-enriched metal oxide powders; and a hydrometallurgical stage, with the steps of leaching, reducing to the metallic state of optionally present nickel, copper and cadmium cations, and electrolysing the resulting solution to obtain metallic zinc, **characterised in that**, in the pyrometallurgical stage, the powders are fed to the furnace at a close distance from the slag such as to prevent losses by turbulence due to the internal negative pressure of the furnace and, in the hydrometallurgical stage, the leaching is preceeded by a water washing, the leaching is sulphuric leaching carried out at a pH ranging from 2 to 4.5, and **in that** iron and fluoride precipitation are attained in a subsequent step of coagulant oxidation in which to the leach solution is added an oxidizer for the oxidation of Fe ions from bivalent to trivalent which precipitate as ferric hydrate by addition of calcium carbonate, the latter addition also determining the precipitation of fluoride ions as calcium fluoride.

2. Pyro-hydrometallurgical process for the recovery of zinc, lead and other value metals from iron- and steelmaking powders according to claim 1, wherein the the powders originate from an electric furnace and the furnace of the pyro-hydrometallurgical stage is a plasma arc furnace.

3. Pyro-hydrometallurgical process for the recovery of zinc, lead and other value metals from iron- and steelmaking powders according to claim 1 or 2, wherein the powders are fed into the furnace at a distance from the slag ranging from 1 to 300 mm, or substantially at slag level.

4. Pyro-hydrometallurgical process for the recovery of zinc, lead and other value metals from iron- and steelmaking powders according to any one of the preceding claims, wherein the sulphuric leaching is carried out with exhausted electrolytic solution from the Zn electrolyzing stage, optionally replenished with fresh sulphuric acid.

5. Pyro-hydrometallurgical process for the recovery of zinc, lead and other value metals from iron- and steelmaking powders according to any one of the claims 1 to 4, wherein the sulphuric leaching is carried out at a pH of about 2.5 when zinc ferrite is present in the powders.

6. Pyro-hydrometallurgical process for the recovery of zinc, lead and other value metals from iron- and steelmaking powders according to any one of the claims 1 to 4, wherein the sulphuric leaching is carried out at a pH of about 4 when zinc ferrite is not present in the powders.

7. Pyro-hydrometallurgical process for the recovery of zinc, lead and other value metals from iron- and steelmaking powders according to any one of the preceding claims, wherein the lead sulfate precipitated during the sulphuric leaching step is sent to the pyrometallurgical stage.

8. Pyro-hydrometallurgical process for the recovery of zinc, lead and other value metals from iron- and steelmaking powders according to any one of the claims 1 to 7, wherein the oxidizer for oxidizing Fe ions from bivalent to trivalent in the coagulant oxidation step is selected from the group comprising hydrogen peroxide and air.

9. Pyro-hydrometallurgical process for the recovery of zinc, lead and other value metals from iron- and steelmaking powders according to claim 8, wherein the hydrogen peroxide is 30% hydrogen peroxide.

10. Pyro-hydrometallurgical process for the recovery of zinc, lead and other value metals from iron- and steelmaking powders according to any one of the preceding claims, wherein the metal reduction of the optionally present nickel, copper and cadmium cations is obtained, at temperatures ranging from 85 to 95°C, in a single stage by addition of fine-powdered zinc in excess, of copper (II) sulfate and of antimony tartrate, the reduction treatment time ranging from 0.5 to 1.5 hours.

11. Pyro-hydrometallurgical process for the recovery of zinc, lead and other value metals from iron- and steelmaking powders according to any one of the claims 1 to 10, wherein the electrolysis is conducted in cells having anodes of lead or of lead alloys.

12. Pyro-hydrometallurgical process for the recovery of zinc, lead and other value metals from iron- and steelmaking powders according to claim 11, wherein the lead alloy of the anodes is 1% Ag lead alloy.

13. Pyro-hydrometallurgical process for the recovery of zinc, lead and other value metals from iron- and steelmaking powders according to any one of the preceding claims, wherein the electrolysis is conducted in cells having aluminium cathode.

14. Pyro-hydrometallurgical process for the recovery of zinc, lead and other value metals from iron- and steelmaking powders according to claim 13, wherein prior to the carrying out of the electrolysis the aluminium cathodes are kept in the sulfuric electrolytic solution for a time ranging from 0.5 to 15 min.

15. Pyro-hydrometallurgical process for the recovery of zinc, lead and other value metals from iron- and steelmaking powders according to any one of the preceding claims 11 to 14, wherein dissolved lead form the lead anode stripping in the electrolytic solution is coprecipitated as sulfate by addition, optionally in form of an electrolytic solution, of compounds selected from the group comprising strontium and barium carbonates and hydroxides.

## Patentansprüche

1. Pyro-hydrometallurgisches Verfahren zur Rückgewinnung von Zink, Blei und anderen wertvollen Metallen aus Pulvern der Eisen- und Stahlherstellung umfassend eine pyrometallurgische Stufe, mit den Schritten des Zuführens und Behandelns der Pulver in einem Ofen, welcher geschmolzene Pulver der Eisen- und Stahlherstellung und Schlacke enthält, unter reduzierenden Bedingungen aufgrund der Anwesenheit von kohlenstoffhaltigem Material, durch die chemischer Reduzierung der Metalloxide, welche darin enthalten sind, und unter Herstellung von Ferrolegierungen, welche nicht flüchtige Metalle enthalten, und von inerter Schlacke, nach der Verbrennungskammer Reoxidieren von flüchtigen Metallen und Sammeln der resultierenden ZnOangereicherten Metalloxidpulver; und eine hydrometallurgische Stufe, mit den Schritten des Auslaugens, Reduzierens in den metallischen Zustand von ggf. vorhandenen Nickel-, Kupfer- und Kadmiumkationen, und Elektrolysieren der resultierenden Lösung um metallisches Zink zu erhalten, **dadurch gekennzeichnet, dass** in der pyrometallurgischen Stufe die Pulver dem Ofen mit einem nahen Abstand zu der Schlacke zugeführt werden, um so Verluste durch Turbulenz aufgrund des inneren negativen Drucks des Ofens zu verhindern und wobei in der hydrometallurgischen Stufe das Auslaugen durch ein Wasserwaschen durchgeführt wird, das Auslaugen Schwefelauslaugen ist, durchgeführt bei einem pH-Wert in dem Bereich von 2 bis 4,5, und dadurch dass Eisen- und Fluoridausfällung in einem nachfolgenden Schritt der Koagulantoxidation erzielt wird, wobei zu der Auslaugungslösung ein Oxidationsmittel zugegeben wird, um die Fe-lonen von zweiwertig zu dreiwertig zu oxidieren, welche als Eisen (III)-Hydrat durch Zugabe von Kalziumcarbonat ausfallen, wobei die letztere Zugabe auch die Ausfällung von Fluoridionen als Kalziumfluorid bestimmt.

2. Pyro-hydrometallurgisches Verfahren zur Rückgewinnung von Zink, Blei und anderen wertvollen Metallen aus Pulvern der Eisen- und Stahlherstellung nach Anspruch 1, wobei die Pulver aus einem elektrischen Ofen stammen und der Ofen der pyrohydrometallurgischen Stufe ein Plasmaofen ist.

3. Pyro-hydrometallurgisches Verfahren zur Rückgewinnung von Zink, Blei und anderen wertvollen Metallen aus Pulvern der Eisen- und Stahlherstellung nach Anspruch 1 oder 2, wobei die Pulver mit einem Abstand von der Schlacke bzw. Asche in dem Bereich von 1 bis 300 mm oder im wesentlichen auf der Höhe der Schlacke in den Ofen eingeführt werden.

4. Pyro-hydrometallurgisches Verfahren zur Rückgewinnung von Zink, Blei und anderen wertvollen Metallen aus Pulvern der Eisen- und Stahlherstellung gemäß einem der vorangehenden Ansprüche, wobei das Schwefelauslaugen (sulfuric leaching) mit der verbrauchten elektrolytischen Lösung aus der Zn-Elektrolysierungsstufe durchgeführt wird, ggf. ergänzt mit frischer Schwefelsäure.

5. Pyro-hydrometallurgisches Verfahren zur Rückgewinnung von Zink, Blei und anderen wertvollen Metallen aus Pulvern der Eisen- und Stahlherstellung nach einem der Ansprüche 1 bis 4, wobei das Auslaugen mit Schefelsäure bei einem pH-Wert von ungefähr 2,5 durchgeführt wird, wenn Zinkferrit in den Pulvern vorhanden ist.

6. Pyro-hydrometallurgisches Verfahren zur Rückgewinnung von Zink, Blei und anderen wertvollen Metallen aus Pulvern der Eisen- und Stahlherstellung nach einem der Ansprüche 1 bis 4, wobei das Schwefelauslagen bei einem pH-Wert von 4 durchgeführt wird, wenn Zinkferrit nicht in den Pulvern vorhanden ist.

7. Pyro-hydrometallurgisches Verfahren zur Rückgewinnung von Zink, Blei und anderen wertvollen Metallen aus Pulvern der Eisen- und Stahlherstellung nach einem der vorangehenden Ansprüche, wobei das während des Schwefelauslaugschrittes ausgefällte Bleisulfat in die pyro-metallurgische Stufe überführt wird.

8. Pyro-hydrometallurgisches Verfahren zur Rückgewinnung von Zink, Blei und anderen wertvollen Metallen aus Pulvern der Eisen- und Stahlherstellung gemäß einem der Ansprüche 1 bis 7, wobei das Oxidationsmittel, um die Fe-lonen in dem Koagulantoxidationsschritt von zweiwertig auf dreiwertig zu oxidieren, aus der Gruppe ausgewählt wird, umfassend Wasserstoffperoxid und Luft.

9. Pyro-hydrometallurgisches Verfahren zur Rückgewinnung von Zink, Blei und anderen wertvollen Metallen aus Pulvern der Eisen- und Stahlherstellung gemäß Anspruch 8, wobei das Wasserstoffperoxid 30%iges Wasserstoffperoxid ist.

10. Pyro-hydrometallurgisches Verfahren zur Rückgewinnung von Zink, Blei und anderen wertvollen Metallen aus Pulvern der Eisen- und Stahlherstellung gemäß einem der vorangehenden Ansprüche, wobei die Metallreduzierung der ggf. vorhandenden Nickel-, Kupfer- und Kadmiumkationen bei Temperaturen in dem Bereich von 85 bis 95°C in einer einzelnen Stufe erzielt wird, durch Zugabe von feinpulvrigem Zink im Überschuss, von Kuper(II)Sulfat und von Antimontartrat, wobei die Reduzierungsbehandlungsdauer in dem Bereich von 0,5 bis 1,5 Stunden liegt.

11. Pyro-hydrometallurgisches Verfahren zur Rückgewinnung von Zink, Blei und anderen wertvollen Metallen aus Pulvern der Eisen- und Stahlherstellung nach einem der Ansprüche 1 bis 10, wobei die Elektrolyse in Zellen mit Anoden aus Blei oder aus Bleilegierungen durchgeführt wird.

12. Pyro-hydrometallurgisches Verfahren zur Rückgewinnung von Zink, Blei und anderen wertvollen Metallen aus Pulvern der Eisen- und Stahlherstellung nach Anspruch 11, wobei die Bleilegierung der Anoden 1 % Ag-Bleilegierung ist.

13. Pyro-hydrometallurgisches Verfahren zur Rückgewinnung von Zink, Blei und anderen wertvollen Metallen aus Pulvern der Eisen- und Stahlherstellung gemäß einem der vorangehenden Ansprüche, wobei die Elektrolyse in Zellen mit Aluminiumkathoden durchgeführt wird.

14. Pyro-hydrometallurgisches Verfahren zur Rückgewinnung von Zink, Blei und anderen wertvollen Metallen aus Pulvern der Eisen- und Stahlherstellung nach Anspruch 13, wobei, bevor die Elektrolyse durchgeführt wird, die Aluminiumkathoden in der elektrolytischen Schwefellösung für eine Dauer in dem Bereich von 0,5 bis 15 Minuten gehalten werden.

15. Pyro-hydrometallurgisches Verfahren zur Rückgewinnung von Zink, Blei und anderen wertvollen Metallen aus Pulvern der Eisen- und Stahlherstellung gemäß einem der vorangehenden Ansprüche 11 bis 14, wobei aufgelöstes Blei aus der Bleianode, welches sich in die elektrolytische Lösung löst, als Sulfat mitgefällt wird, durch Zugabe, ggf. in Form eine elektrolytischen Lösung, von Verbindungen gewählt aus der Gruppe umfassend Strontium- und Bariumkarbonate und -hydroxide.

## Revendications

1. Procédé pyrohydrométallurgique pour la récupération de zinc, de plomb et d'autres métaux de valeur à partir de poudres de production de fer et d'acier, comprenant une étape pyrométallurgique, avec les étapes d'alimentation et de traitement des poudres dans un four contenant des poudres fondues de production de fer et d'acier et des scories, dans des conditions réductrices dues à la présence de matière carbonée, avec réduction chimique des oxydes de métaux contenus dedans et avec production de ferroalliages contenant des métaux non volatils et de scories inertes, réoxydation dans une chambre de postcombustion, de métaux volatils et collecte des poudres d'oxydes de métaux enrichies en ZnO résultantes; et une étape hydrométallurgique, avec les étapes de lixiviation, de réduction à l'état métallique des cations de nickel, de cuivre et de cadmium facultativement présents, et d'électrolyse de la solution résultante pour obtenir du zinc métallique, **caractérisé en ce que**, dans l'étape pyrométallurgique, les poudres sont délivrées au four à une distance proche des scories de manière à empêcher des pertes par turbulence dues à la pression négative interne du four et, dans l'étape hydrométallurgique, la lixiviation est précédée d'un lavage à l'eau, la lixiviation est une lixiviation sulfurique réalisée à un pH dans la gamme de 2 à 4,5, et **en ce qu'**une précipitation de fer et de fluorure est atteinte dans une étape ultérieure d'oxydation coagulante dans laquelle on ajoute à la solution de lixiviation un oxydant pour l'oxydation des ions Fe de bivalent à trivalent qui précipitent en tant qu'hydrate ferrique par addition de carbonate de calcium, l'addition ultérieure déterminant également la précipitation des ions fluorure en tant que fluorure de calcium.

2. Procédé pyrohydrométallurgique pour la récupération de zinc, de plomb et d'autres métaux de valeur à partir de poudres de production de fer et d'acier selon la revendication 1, dans lequel les poudres proviennent d'un four électrique et le four de l'étape pyrohydrométallurgique est un four à arc plasma.

3. Procédé pyrohydrométallurgique pour la récupération de zinc, de plomb et d'autres métaux de valeur à partir de poudres de production de fer et d'acier selon la revendication 1 ou 2, dans lequel les poudres sont délivrées dans le four à une distance des scories dans la gamme de 1 à 300 mm, ou sensiblement au niveau des scories.

4. Procédé pyrohydrométallurgique pour la récupération de zinc, de plomb et d'autres métaux de valeur à partir de poudres de production de fer et d'acier selon l'une quelconque des revendications précédentes, dans lequel la lixiviation sulfurique est réalisée avec une solution électrolytique épuisée de l'étape d'électrolyse de Zn, facultativement réapprovisionnée avec de l'acide sulfurique frais.

5. Procédé pyrohydrométallurgique pour la récupération de zinc, de plomb et d'autres métaux de valeur à partir de poudres de production de fer et d'acier selon l'une quelconque des revendications 1 à 4, dans lequel la lixiviation sulfurique est réalisée à un pH d'environ 2,5 lorsque de la ferrite de zinc est présente dans les poudres.

6. Procédé pyrohydrométallurgique pour la récupération de zinc, de plomb et d'autres métaux de valeur à partir de poudres de production de fer et d'acier selon l'une quelconque des revendications 1 à 4, dans lequel la lixiviation sulfurique est réalisée à un pH d'environ 4 lorsque de la ferrite de zinc n'est pas présente dans les poudres.

7. Procédé pyrohydrométallurgique pour la récupération de zinc, de plomb et d'autres métaux de valeur à partir de poudres de production de fer et d'acier selon l'une quelconque des revendications précédentes, dans lequel le sulfate de plomb précipité pendant l'étape de lixiviation sulfurique est envoyé à l'étape pyrométallurgique.

8. Procédé pyrohydrométallurgique pour la récupération de zinc, de plomb et d'autres métaux de valeur à partir de poudres de production de fer et d'acier selon l'une quelconque des revendications 1 à 7, dans lequel l'oxydant pour l'oxydation des ions Fe de bivalent à trivalent dans l'étape d'oxydation coagulante est choisi dans le groupe comprenant le peroxyde d'hydrogène et l'air.

9. Procédé pyrohydrométallurgique pour la récupération de zinc, de plomb et d'autres métaux de valeur à partir de poudres de production de fer et d'acier selon la revendication 8, dans lequel le peroxyde d'hydrogène est du peroxyde d'hydrogène à 30 %.

10. Procédé pyrohydrométallurgique pour la récupération de zinc, de plomb et d'autres métaux de valeur à partir de poudres de production de fer et d'acier selon l'une quelconque des revendications précédentes, dans lequel la réduction de métal des cations de nickel, de cuivre et de cadmium facultativement présents est obtenue, à des températures dans la gamme de 85 à 95 °C, dans une seule étape par addition de zinc en poudre fine en excès, de sulfate de cuivre (II) et de tartrate d'antimoine, la durée du traitement de réduction étant dans la gamme de 0,5 à 1,5 heure.

11. Procédé pyrohydrométallurgique pour la récupération de zinc, de plomb et d'autres métaux de valeur à partir de poudres de production de fer et d'acier selon l'une quelconque des revendications 1 à 10, dans lequel l'électrolyse est effectuée dans des cellules comportant des anodes de plomb ou d'alliages de plomb.

12. Procédé pyrohydrométallurgique pour la récupération de zinc, de plomb et d'autres métaux de valeur à partir de poudres de production de fer et d'acier selon la revendication 11, dans lequel l'alliage de plomb des anodes est un alliage de plomb à 1 % Ag.

13. Procédé pyrohydrométallurgique pour la récupération de zinc, de plomb et d'autres métaux de valeur à partir de poudres de production de fer et d'acier selon l'une quelconque des revendications précédentes, dans lequel l'électrolyse est effectuée dans des cellules comportant une cathode en aluminium.

14. Procédé pyrohydrométallurgique pour la récupération de zinc, de plomb et d'autres métaux de valeur à partir de poudres de production de fer et d'acier selon la revendication 13, dans lequel avant de réaliser l'électrolyse, les cathodes en aluminium sont maintenues dans la solution électrolytique sulfurique pendant une durée dans la gamme de 0,5 à 15 min.

15. Procédé pyrohydrométallurgique pour la récupération de zinc, de plomb et d'autres métaux de valeur à partir de poudres de production de fer et d'acier selon l'une quelconque des revendications 11 à 14 précédentes, dans lequel du plomb dissous provenant de l'anode en plomb qui est décapée dans la solution électrolytique est coprécipité en tant que sulfate par addition, facultativement sous la forme d'une solution électrolytique, de composés choisis dans le groupe comprenant les carbonates et les hydroxydes de strontium et de baryum.
